# EUROPÄISCHE PATENTSCHRIFT

(11) **EP 0 413 661 B1**
(45) Veröffentlichungstag und Bekanntmachung des Hinweises auf die Patenterteilung: **14.06.1995**
(21) Anmeldenummer: 90810596.8
(22) Anmeldetag: 07.08.1990
(51) Int. Cl.: C07F 9/145

(54) **Verfahren zur Herstellung von Tris(2,4-di-tert-butyl-phenyl)phosphit**
Process for preparing tris (2,4-di-tert-butyl-phenyl) phosphite
Procédé de préparation de phosphite de tris (di-tert-butyl-2,4-phényl)

(30) Priorität: 15.08.1989 CH 2975/89
(43) Veröffentlichungstag der Anmeldung: 20.02.1991
(73) Patentinhaber: CIBA-GEIGY AG, 4002 Basel (CH)
(72) Erfinder: Maul, Rudolf, Dr., D-6143 Lorsch/Hessen (DE); Schenk, Volker, Dr., D-6140 Bensheim 6 (DE)

(56) Entgegenhaltungen:
- EP-A- 0 000 757
- DE-A- 2 007 070
- DE-A- 2 940 620
- DE-A- 2 944 254

## Beschreibung

Die Erfindung betrifft ein Verfahren zur Herstellung von Tris(2,4-di-tert-butylphenyl)phosphit aus 2,4-Di-tert-butylphenol und Phosphortrichlorid in Gegenwart eines Katalysators.

Aus der DE-A 20 07 070 ist bekannt, Triarylphosphite aus Phenolen und Phosphortrichlorid herzustellen, wobei die Reaktion in drei Stufen in hintereinandergeschalteten Anlageteilen abläuft. Das Verfahren kann in Abwesenheit von Lösungsmittel betrieben werden, wobei sich aber Probleme mit einer Schaumbildung im Reaktionsgemisch bis hin zur Störung des ordentlichen Reaktionsablaufes ergeben. Aus der EP-A 0 000 757 ist ein Verfahren zur Herstellung von Triarylphosphiten durch Umsetzung von Phosphortrihalogeniden mit Hydroxyaromaten in Gegenwart von Katalysatoren bekannt. Gemäss Beispiel 4 der EP-A 0 000 757 kann Tris(2,4-di-tert-butyl-phenyl)-phosphit unter Mitverwendung eines Lösungsmittels hergestellt werden. Das Arbeiten mit einem Lösungsmittel hat den Vorteil, dass der Reaktionsablauf und damit auch die unerwünschte Schaumbildung kontrolliert werden können, hat aber seinerseits den unübersehbaren Nachteil, dass das Lösungsmittel durch sein Volumen die Raum/Zeit-Ausbeute verschlechtert, mit den Reaktanden aufgeheizt und abgekühlt und am Prozessende abgetrennt und aufgearbeitet werden muss.

Aufgabe vorliegender Erfindung war es, die genannten Nachteile zu vermeiden und ein Verfahren zur Verfügung zu stellen, das es ermöglicht, Tris(2,4-di-tert-butylphenyl)phosphit auf einfache Weise in hohen Raum/Zeit-Ausbeuten herzustellen.

Erfindungsgemäss wird das mit einem Verfahren erreicht, das dadurch gekennzeichnet ist, dass die Reaktion in einem wenigstens dreistufigen Verfahren ausgeführt wird, wobei in einer Vorstufe das 2,4-Di-tert-butylphenol und 40 - 100 % des Katalysators zusammengegeben und in einer ersten Stufe das 2,4-Di-tert-butylphenol mit 40-100% des Katalysators zum Phosphortrichlorid hinzugegeben wird, wobei das Reaktionsgemisch bei Normaldruck und Temperaturen von 55°C bis 70°C während einer Verweilzeit von 15 bis 40 Minuten reagieren gelassen wird, daraufhin wird das Reaktionsgemisch, in einer zweiten Stufe, bei Normaldruck und Temperaturen von über 140°C reagieren gelassen, wobei verbleibende Mengen an Katalysator der ersten und/oder zweiten Reaktionsstufe zugegeben werden, daraufhin das Reaktionsgemisch, in einer dritten Reaktionsstufe, bei vermindertem Druck bei Temperaturen von mindestens 186°C gehalten wird und anschliessend aus dem Reaktionsgemisch das Tris(2,4-di-tert-butylphenyl)phosphit isoliert wird, wobei das Verfahren in Abwesenheit von Lösungsmitteln ausgeführt wird.

Nachfolgende Ausführungsformen sind, unabhängig voneinander, bevorzugt, z.B. dass das Reaktionsgemisch einer vierten Stufe unterworfen wird, wobei in der vierten Stufe das Reaktionsgemisch bei mindestens 186°C und bei vermindertem Druck, vorzugsweise einem Druck von 6 bis 20 hPa, gehalten wird; dass in der zweiten Stufe eine Reaktionszeit von 45 bis 75 Minuten eingehalten wird; dass in der dritten Stufe eine Reaktionszeit von 1,5 bis 2,5 Stunden eingehalten wird; dass in der vierten Stufe eine Reaktionszeit von 20 bis 120 Minuten eingehalten wird und dass in der vierten Stufe eine Temperatur von 190 bis 195° eingehalten wird.

In zweckmässiger Ausführungsform des Verfahrens wird das 2,4-Di-tert-butylphenol in 1- bis 1,1-facher stöchiometrischer Menge, bezogen auf Phosphortrichlorid, zugegeben.

Für das erfindungsgemässe Verfahren bieten sich beispielsweise die in der EP-A 0 000 757 beschriebenen Katalysatoren an.

Beispiele für derartige Katalysatoren sind Verbindungen aus der Gruppe der Amine oder Ammoniumsalze, der Amide der Carbonsäuren oder Kohlensäure, der nicht-aromatischen N-haltigen Heterocyclen und deren Salze, der primären, sekundären und tertiären Phosphine und deren Salze oder Ester der Phosphorsäuren und Phosphonsäuren.

Die Amine und Ammoniumsalze, Amide und stickstoffhaltigen Heterocyclen oder Phosphine können als Substituenten gegebenenfalls durch Sauerstoff-oder Schwefelatome unterbrochenes Alkyl, Cycloalkyl; Aryl, hier besonders Phenyl, Alkaryl, hier besonders alkyliertes Phenyl, Aralkyl, hier besonders Benzyl oder Alkaralkyl, hier besonders alkyliertes Benzyl enthalten, die vorzugsweise 1 bis 18, insbesondere 1 bis 12 C-Atome aufweisen. Das Alkyl enthält besonders 1 bis 6 C-Atome und bei Cycloalkyl handelt es sich besonders um Cyclopentyl und Cyclohexyl.

Bei den als Salze zu verwendenden Katalysatoren handelt es sich bevorzugt um die Halogenide und besonders um die Chloride. Die Salze können auch in situ durch den beim Verfahren entstehenden Halogenwasserstoff gebildet werden. Gleichwohl ist es in einigen Fällen vorteilhaft, die Salze selbst als Katalysatoren einzusetzen.

Eine Katalysatorgruppe sind die Amine und Ammoniumsalze. Es kann sich hierbei um primäre, sekundäre und tertiäre Amine, sowie deren Salze handeln. Zu den Salzen zählen auch die quartären Ammoniumsalze. Bevorzugt sind die sekundären Amine, deren Salze und die quartären Ammoniumsalze. Bevorzugt sind dabei die alkyl- und cycloalkylsubstituierten Amine bzw. Ammoniumsalze.

Beispiele sind: Methyl-, Ethyl-, Propyl-, n-Butyl-, t-Butyl-, Pentyl-, Octyl-, Dodecyl-, Phenyl-, Benzyl-, Dimethyl-, Diethyl-, Methylethyl, Methylbutyl, Methyloctyl, Methylphenyl-, Ethylbenzyl-, Trimethyl-, Triethyl-, Tributyl-, Octyldimethyl-, Dimethylphenylamin sowie Tetramethyl-, Trimethylethyl-, Triethylmethyl-, Tributylmethyl-, Tetrabutyl-, Trimethyloctyl-, Triphenylmethyl- und Tribenzylmethylammoniumchlorid, -bromid oder -jodid. Beispiele für weitere Ammoniumsalze sind Methyl-, Octyl-, Dimethyl-, Methylcyclohexyl-, Dibenzyl-, Diphenyl-, Trimethyl-, Tributyl-, Tribenzyl- und Triphenylammoniumchlorid, -bromid und -jodid. Die Amine und Ammoniumsalze können auch aromatische N-heterocyclische Reste enthalten, z.B. Pyridyl. Diese Amine sind wirksamer als die reinen aromatischen N-Heterocyclen.

Eine weitere Gruppe von Katalysatoren sind die Amide der Carbonsäuren. Zu dieser Gruppe zählen auch die Harnstoffe und ihre Bisharnstoffderivate. Die Amide können sich von mehrfunktionellen, vorzugsweise monofunktionellen, Carbonsäuren ableiten, die insbesondere 1 bis 14 C-Atome enthalten. Die Amide können auch von aromatischen N-Heterocyclen abgeleitet sein. Ferner sind auch cyclische Amide wie z.B. ε-Caprolactam geeignet. Die von Carbonsäuren abgeleiteten Amide entsprechen bevorzugt der Formel 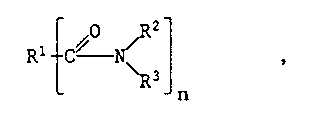
worin für n = 1 R¹ Phenyl, Benzyl, Naphthyl, Cyclohexyl, Cyclopentyl, Pyridyl, Wasserstoff oder Alkyl mit 1 bis 13, vorzugsweise 1 bis 6 C-Atomen ist, für n = 2 R¹ Phenylen, Naphthylen, Cyclohexylen oder Alkylen mit 1 bis 12, vorzugsweise 1 bis 6 C-Atomen oder eine direkte Bindung ist und R² und R³ unabhängig voneinander für ein Wasserstoffatom, Phenyl, Benzyl, Cyclohexyl und Alkyl mit 1 bis 12, vorzugsweise 1 bis 6 C-Atomen stehen oder R² und R³ zusammen gegebenenfalls durch O- oder S-Atome unterbrochenes Alkylen mit bevorzugt 4 - 7 C-Atomen bedeuten. Beispiele sind Formamid, Oxalsäurediamid, Dimethylformamid, Acetamid, N,N-Dimethylacetamid, Picoanilid, Benzoesäureamid, Terephthalsäurediamid, Trimellitsäuretriamid. Ganz besonders bevorzugt bei vorliegendem Verfahren ist Dimethylformamid als Katalysator.

Als Beispiele für die Amide der Kohlensäure seien neben Harnstoff genannt: Tetramethylharnstoff, Diphenyl- oder Dibenzylharnstoff, Diethylharnstoff, Di-n-octylharnstoff, sowie Bisharnstoffderivate wie z.B. Ethylenbisharnstoff. Beispiele für cyclische Harnstoffe sind Hydantoin und Benzimidazolon.

Eine weitere Gruppe für das erfindungsgemässe Verfahren geeigneter Katalysatoren sind nichtaromatische N-Heterocyclen. Diese können 1 bis 3 N-Atome sowie gegebenenfalls ein oder 2 O- und S-Atome enthalten. Sie können auch ungesättigt sein. Sie können in Form von Salzen vorliegen, auch in Form von quartären Ammoniumbasen und die N-Atome können substituiert sein, vorzugsweise mit Alkylgruppen von 1 bis 12 C-Atomen.
Beispiele sind:
Pyrrolidin, Δ³-Pyrrolin, N-Methylpyrrolidin, Dihydroindol, Pyrazolidin, Imidazolidin, Δ²-Pyrazolin, 1-Phenylpyrazolidin, Oxazolidin, Thiazolidin, Oxazolin, Triazolidin, Oxadiazolidin, Thiadiazolidin, Piperidin, Morpholin, N-Methylmorpholin, Chinolidin, 1,2-Dihydropurin, 8-Aza-bicyclo-(3,2,1)-octan, Piperazin, N-Methylpiperazin.

Eine weitere Gruppe erfindungsgemäss zu verwendender Katalysatoren sind die primären, sekundären und tertiären Phosphine und deren Salze. Bevorzugt sind die tertiären Phosphine und ihre Salze und unter den Salzen die Hydrohalogenide, besonders die Hydrochloride, -bromide und -jodide. Das Phosphoratom kann ggf. durch Phenyl, Benzyl, Cyclohexyl und/oder Alkyl mit 1 bis 12, vorzugsweise 1 bis 6 C-Atome substituiert sein. Beispiele sind:
Methylphosphin, Ethylphosphin, Hexylphosphin, Dodecylphosphin, Dimethyl-, Ethylmethyl-, Diphenyl-, Dicyclohexyl-, Dibenzyl-, Phenylmethylphosphin, Triphenyl-, Tribenzyl-, Tricyclohexyl-, Trimethyl-, Triethyl-, Tripropyl-, Tributyl-, Triisobutyl-, Tripentyl-, Trihexyl-, Dimethylphenylphosphin, ihre Hydrochloride, -bromide und -jodide.

Im Fall der Phosphorsäure- und Phosphonsäureester leiten sich die Alkoholreste bevorzugt von Phenolen und besonders C₁-C₁₈-Alkanolen sowie Cycloalkanolen ab, von z.B. Phenol, 2-Methylphenol, Cyclohexanol, Methanol, Ethanol, Propanol, Butanol, Hexanol, Octanol, i-Octanol, Dodecanol, Octadecanol. Beispiele für Phosphonsäuren sind: Phenyl-, Benzyl-, Cyclohexyl-, Methyl-, Ethyl-, Propyl-, Butyl-, Pentyl- und Hexylphosphonsäure.

Der Katalysator kann z.B. in Mengen von 0,005 bis 10 Mol-%, zweckmässig in Mengen von 0,05 bis 8 Mol % und vorzugsweise von 4 bis 6 Mol-%, jeweils bezogen auf das Phosphortrichlorid, eingesetzt werden.

Das erfindungsgemässe Verfahren wird in an sich bekannten Vorrichtungen durchgeführt. Besonders zweckmässig sind Reaktionsbehälter in Form von Rührkesseln, denkbar sind auch Reaktionsbehälter in Form von Reaktionskolonnen, insbesondere mit Einsätzen, welche den Reaktionsteilnehmern durch gewundene Wege eine innige Durchmischung aufzwingen.

Zur Ausführung der ersten Stufe des Verfahrens ist zweckmässig ein beheizbares Reaktionsgefäss, ausgerüstet mit wenigstens zwei Einlässen, einem Auslass und einer Rührvorrichtung vorgesehen. Vorzugsweise wird das Phosphortrichlorid über den einen Einlass direkt, das 2,4-Di-tert-butylphenol durch eine Kolonne, beispielsweise eine Füllkörperkolonne, und den zweiten Einlass in das Reaktionsgefäss geführt. Der Katalysator kann, je nach Beschaffenheit, teilweise separat über einen dritten Einlass dem Reaktionsgefäss zugeführt werden. Es werden 40 - 100 % des Katalysators, ebenfalls über die Füllkörperkolonne, in den zweiten Einlass gegeben. Die Eduktströme werden zweckmässig derart geführt, dass das Phosphortrichlorid vorgelegt wird und der Katalysator und die Phenolverbindung über die Füllkörperkolonne in das Reaktionsgefäss gelangen. Das während der einsetzenden Reaktion gebildete HCl entweicht durch die Füllkörperkolonne im Gegenstrom zur Phenolverbindung. Mitgetragenes Phosphortrichlorid wird von der Phenolverbindung aufgenommen und wieder in das Reaktionsgefäss zurückgeführt. Der gleichzeitig in der Kolonne gegenwärtige Katalysator katalysiert bereits die Reaktion und das entweichende Phosphortrichlorid setzt sich mit der durch die Kolonne strömenden Phenolverbindung um. Somit findet in der Kolonne bereits eine Vorstufe statt. Das Reaktionsgemisch fliesst dann in das erste Reaktionsgefäss. Die Reaktionsteilnehmer können im Reaktionsgefäss durch eine Rührvorrichtung innig durchmischt werden. Das Reaktionsgemisch wird gleichzeitig auf Temperaturen von 55° bis 70°C erwärmt. Bevorzugt sind Temperaturen von 60 bis 70°C. Das bei der Reaktion entstehende HCl wird über die Füllkörperkolonne abgeführt und entsorgt. Nach 15 bis 40 Minuten ist die erste Stufe der Reaktion beendet. Es kann nun im ersten Reaktionsgefäss die zweite Stufe der Reaktion durchgeführt werden, bevorzugt wird der Inhalt des Reaktionsgefässes der ersten Stufe in ein zweites Reaktionsgefäss, vorzugsweise in einen heizbaren Rührkesselbehälter, übergeführt. Dieser Rührkesselbehälter weist zweckmässig Zuflüsse für das Reaktionsgemisch aus dem Behälter der ersten Stufe und gegebenenfalls für die Zugabe einer zweiten Teilmenge des Katalysators, sowie einen mit Rückflusskondensator ausgestatteten Gasauslass zum Austrag der während der zweiten Reaktionsstufe gebildeten HCl auf. Auch der zweite Rührkesselbehälter ist zweckmässig mit einer Rührvorrichtung ausgerüstet. Das Reaktionsgemisch wird unmittelbar bei Beginn der zweiten Stufe auf über 140°C, z.B. 145 bis 200°C, vorzugsweise auf 150 bis 170°C und besonders bevorzugt auf etwa 160°C gebracht und zweckmässig während 45 Minuten bis 75 Minuten, vorzugsweise während 60 Minuten bei dieser erhöhten Temperatur gehalten. Nach Beendigung der zweiten Stufe wird das Reaktionsgemisch entweder im gleichen Reaktionsgefäss oder zweckmässig in einem weiteren Reaktionsgefäss der dritten Stufe unterworfen. Das beheizbare Reaktionsgefäss für die dritte Stufe ist zweckmässig mit einem Einlass für das Reaktionsgemisch, einem Auslass für gasförmig entweichende Reaktionskomponenten, einem Auslass für das Reaktionsgemisch und zweckmässig einer Rührvorrichtung ausgestattet. Der Auslass für die entweichenden Reaktionskomponenten, insbesondere der HCl, kann einen Rückflusskondensator und gegebenenfalls auch einen Desublimator aufweisen, um die austretenden Reaktionskomponenten zu trennen. Ferner, da die dritte Stufe bei vermindertem Druck abläuft, sind entsprechende Vorkehrungen, wie Vakuumpumpe und entsprechende Abdichtungen und Ventile vorgesehen. Die dritte Stufe der Reaktion wird bei mindestens 186°C, zweckmässig bei 186°C bis 210°C und bevorzugt bei 190 bis 195°C, bei einem verminderten Druck von zweckmässig 10 bis 60 hPa, insbesondere 10 bis 20 hPa, vorzugsweise von 15 hPa ausgeführt. Die Reaktionszeit für die dritte Stufe liegt z.B. bei 1 bis 2,5 Stunden, vorzugsweise bei 2 Stunden. Das Reaktionsgemisch wird nach Ablauf der Reaktionszeit gegebenenfalls der vierten Stufe unterzogen. Dazu wird das Reaktionsgemisch entweder in das Reaktionsgefäss der dritten Stufe oder zweckmässig in ein weiteres Reaktionsgefäss gebracht und in diesem weiteren Reaktionsgefäss, das beheizbar und evakuierbar ist, den Bedingungen der vierten Stufe unterzogen. Zweckmässig wird auch in der vierten Stufe das Reaktionsgemisch gerührt. Deshalb soll das Reaktionsgefäss der vierten Stufe, nebst einem Einlass für das Reaktionsgemisch, eine Rührvorrichtung enthalten und, zur Entfernung insbesondere der gasförmigen Produkte der Reaktion, einen geeigneten Auslass, zweckmässig einen einen Rückflusskondensator und einen Desublimator enthaltenden Auslass, aufweisen. Schliesslich soll an diesem Reaktionsbehälter, zum Austrag des Reaktionsgutes, ein geeigneter Auslass vorgesehen sein. Da die vierte Stufe unter vermindertem Druck ausgeführt werden soll, sind entsprechende Vakuumerzeuger und Abdichtungen vorzusehen. Das Reaktionsgemisch wird zweckmässig während 20 bis 120 Minuten, vorzugsweise während 60 Minuten der vierten Stufe unterzogen. Währenddessen kann der Druck beispielsweise bei 6 bis 20 hPa, zweckmässig bei 10 bis 15 hPa und vorzugsweise bei 10 hPa liegen. Die Temperatur in dieser vierten Stufe liegt bei mindestens 186°C, zweckmässig bei 186°C bis 210°C und insbesondere 190 bis 195°C.

Es ist möglich, das gegebenenfalls im Ueberschuss eingesetzte 2,4-Di-tert-butylphenol aus dem Reaktionsgefäss der dritten oder, wenn angewendet, vierten Stufe abzudestillieren und gewünschtenfalls im Kreislauf wieder der Reaktion zuzuführen. Das überschüssige 2,4-Di-tert-butylphenol kann auch aus dem Reaktionsgemisch der dritten oder, wenn angewendet, vierten Stufe entsorgt werden.

Eine bevorzugte Ausführungsform liegt darin, dass das Verfahren nach vorliegender Erfindung in einer dreistufigen Kesselkaskade ausgeführt wird.

Zu den besonders bevorzugten Ausführungsformen vorliegender Erfindung gehört, dass das Verfahren in einer vierstufigen Kesselkaskade ausgeführt wird.

Eine weitere bevorzugte Ausführungsform ist, dass in wenigstens einer Stufe das Reaktionsgemisch gerührt wird.

Ganz besonders bevorzugt wird in allen vier Stufen gerührt.

Es wird bei vorliegendem Verfahren auch bevorzugt, dass in der zweiten Stufe eine Temperatur von 170 bis 190°C eingehalten wird.

Eine andere Bevorzugung beim erfinderischen Verfahren ist, dass in der dritten und vierten Stufe, unabhängig voneinander, eine Temperatur von 190 bis 195°C eingehalten wird.

Beim erfindungsgemässen Verfahren wird die vorgesehene Katalysatormenge zu 40 bis 100 % durch die Füllkörperkolonne, in welcher die oben beschriebene Vorstufe durchgeführt wird, zur Reaktion gegeben. Zweckmässig werden 50 bis 100 %, bevorzugt 70 bis 100 % und insbesondere 90 bis 100 % des Katalysators über die Füllkörperkolonne zur Reaktion gegeben.

Verbleibende Mengen an Katalysator, soweit nicht über die Füllkörperkolonne eingespiesen, werden der ersten und/oder zweiten Reaktionsstufe zugegeben.

Bevorzugt werden verbleibende Mengen an Katalysator, soweit nicht 100 % des Katalysators über die Füllkörperkolonne zur Reaktion gegeben werden, der ersten Reaktionsstufe zugegeben.

Ganz besonders bevorzugt wird die gesamte Katalysatormenge, d.h. 100 % des Katalysators, über die Füllkörperkolonne zur Reaktion gegeben. Alle Angaben in Prozenten beziehen sich auf das Gewicht.

Besonders bevorzugt beim erfinderischen Verfahren ist die kontinuierliche Arbeitsweise.

Das vorliegende erfindungsgemässe Verfahren hat den Vorteil, dass das verfahrensmässig nur schwer erhältliche Tris(2,4-di-tert-butylphenyl)phosphit in hoher Raum/Zeit-Ausbeute hergestellt werden kann. Durch den Verzicht auf Lösungsmittel steht bei vorliegendem Verfahren mehr Reaktionsvolumen zur Verfügung, wodurch höhere Reaktionstemperaturen und somit grössere Reaktionsgeschwindigkeiten möglich werden und es entfallen die Aufheizzeiten und die Zeit für die Abdestillation des Lösungsmittels vor der weiteren Aufarbeitung, insbesondere der Kristallisation, des Produktes.

Die eingangs zitierten Verfahren zum Stande der Technik vermögen hier nicht zu genügen, da nach jenen Verfahrensweisen für die vorliegend interessierende Verbindung Tris(2,4-di-tert-butylphenyl)phosphit, aufgrund des hohen Schmelzpunktes, zwingend ein Lösungsmittel angewendet werden muss.

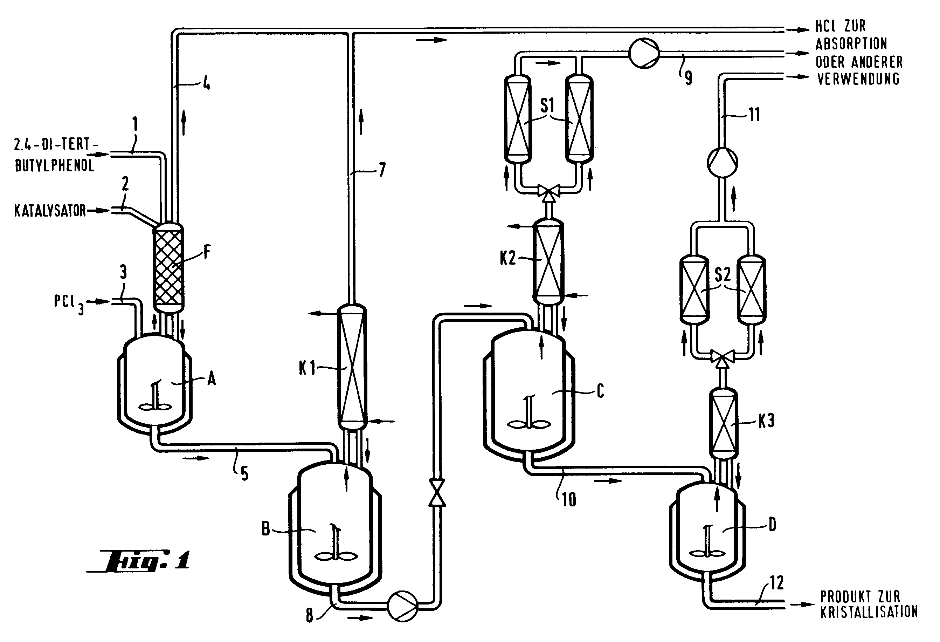

Beispiel: In einer vierstufigen Rührkesselkaskade, wie sie aus der schematischen Darstellung (Abbildung 1) ersichtlich ist, aus a) Reaktor (A) mit Füllkörperkolonne (F), für die erste Stufe, b) Hauptreaktor (B) ausgestattet mit einem Rückflusskondensator (K1) für die zweite Stufe, c) einem mit Rückflusskondensator (K2) und dahinter einem Desublimator (S1) ausgestatteten zweiten Hauptreaktor (C) für die dritte Stufe und schliesslich d) einem mit Rückflusskondensator (K3) und Desublimator (S2) ausgestatteten Nachreaktor (D) werden folgende Mengenströme eingestellt:

| Zugabe von | g/h | Zugabe in |
|---|---|---|
| 2,4-Di-tert-butylphenol [1] Gehalt: 98,9 % | 994 | Ueber Füllkörperkolonne (F) in Reaktor (A) |
| Phosphortrichlorid [3] | 216,2 | Reaktor (A) |
| Dimethylformamid [2] (Katalysator) | 6 | Ueber Füllkörperkolonne (F) in Reaktor (A) |

### a) Bedingungen im Reaktor (A):

Normaldruck, Temperatur 65°C, Verweildauer 30 Minuten, Austrag der 89,8 g/h HCl [4] über die Füllkörperkolonne (F) zur Entsorgung, Austrag von 1126,4 g/h Reaktionsgemisch [5] über das Bodenventil in den ersten Hauptreaktor (B).

### b) Bedingungen im ersten Hauptreaktor (B):

Normaldruck, Temperatur 165°C, Verweildauer 1 Stunde, Austrag von 64 g/h HCl [7] über einen Rückflusskondensator (K1) zur Entsorgung, Austrag von 1062,4 g/h Reaktionsgemisch [8] über das Bodenventil in den zweiten Hauptreaktor (C).

### c) Bedingungen im zweiten Hauptreaktor (C):

Unterdruck 15 hPa, Temperatur 190°C, Verweildauer 2 Stunden, Austrag von 13 g/h HCl [9] über einen Rückflusskühler (K2) und einen Desublimator (S1), Austrag von 1049,4 g/h Reaktionsgemisch [10] über das Bodenventil in den Nachreaktor (D).

### d) Bedingungen im Nachreaktor (D):

Unterdruck 10 hPa, Temperatur 190°C, Verweildauer 60 Minuten, Austrag von 5,4 g/h HCl [11] über einen Rückflusskondensator (K3) und einen Desublimator (S2), Austrag von 1045 g/h Reaktionsgemisch [12], enthaltend 1003,2 g/h Tris(2,4-di-tert-butylphenyl)phosphit, zur Kristallisation.

Das Endprodukt ist von hoher Reinheit und ein Gehalt an Monochlor- und Dichlorverbindungen oder unreagiertem PCl₃ konnte praktisch nicht festgestellt werden.

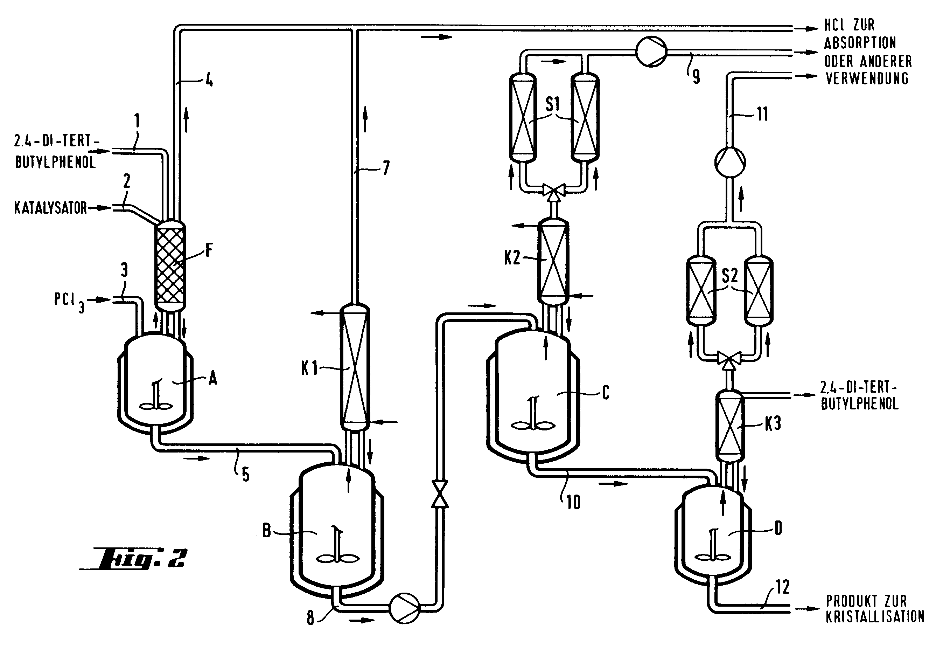

Abbildung 2 zeigt eine alternative Ausführungsform, die sich von der vorbeschriebenen Ausführungsform darin unterscheidet, dass der Rückflusskondensator (K3) auch eine Destillationsvorrichtung darstellt, in der das überschüssige 2,4-Di-tert-butylphenol abgetrennt wird. Dieses 2,4-Di-tert-butylphenol kann im Kreislauf wieder über den Zulauf [1] zur Reaktion gegeben werden.

## Patentansprüche

1. Verfahren zur Herstellung von Tris(2,4-di-tert-butylphenyl)phosphit aus 2,4-Di-tert-butylphenol und Phosphortrichlorid in Gegenwart von Katalysatoren, dadurch gekennzeichnet, dass die Reaktion in einem wenigstens dreistufigen Verfahren ausgeführt wird, wobei in einer Vorstufe das 2,4-Di-tert-butylphenol und 40 - 100 % des Katalysators zusammengegeben und in einer ersten Stufe das 2,4-Di-tert-butylphenol mit 40-100% des Katalysators zum Phosphortrichlorid hinzugegeben wird, wobei das Reaktionsgemisch bei Normaldruck und Temperaturen von 55 bis 70°C während einer Verweilzeit von 15 bis 40 Minuten reagieren gelassen wird, daraufhin wird das Reaktionsgemisch, in einer zweiten Stufe, bei Normaldruck und Temperaturen von über 140°C reagieren gelassen, wobei verbleibende Mengen an Katalysator der ersten und/oder zweiten Reaktionsstufe zugegeben werden, daraufhin das Reaktionsgemisch in einer dritten Reaktionsstufe bei vermindertem Druck bei Temperaturen von mindestens 186°C gehalten wird und anschliessend aus dem Reaktionsgemisch das Tris(2,4-di-tert-butylphenyl)phosphit isoliert wird, wobei das Verfahren in Abwesenheit von Lösungsmitteln ausgeführt wird.

2. Verfahren nach Anspruch 1, dadurch gekennzeichnet, dass das Reaktionsgemisch einer vierten Stufe unterworfen wird, wobei in der vierten Stufe das Reaktionsgemisch bei mindestens 186°C und bei vermindertem Druck gehalten wird.

3. Verfahren nach Anspruch 1, dadurch gekennzeichnet, dass in der zweiten Stufe eine Reaktionszeit von 45 bis 75 Minuten eingehalten wird.

4. Verfahren nach Anspruch 1, dadurch gekennzeichnet, dass in der dritten Stufe eine Reaktionszeit von 1,5 bis 2,5 Stunden eingehalten wird.

5. Verfahren nach Anspruch 2, dadurch gekennzeichnet, dass in der vierten Stufe eine Reaktionszeit von 20 bis 120 Minuten eingehalten wird.

6. Verfahren nach Anspruch 2, dadurch gekennzeichnet, dass in der vierten Stufe eine Temperatur von 190 bis 195°C eingehalten wird.

7. Verfahren gemäss Anspruch 1, dadurch gekennzeichnet, dass das 2,4-Di-tert-butylphenol in 1 bis 1,1 facher stöchiometrischer Menge, bezogen auf das Phosphortrichlorid, zugegeben wird.

8. Verfahren gemäss Anspruch 1, dadurch gekennzeichnet, dass das Verfahren in einer dreistufigen Kesselkaskade ausgeführt wird.

9. Verfahren gemäss Anspruch 2, dadurch gekennzeichnet, dass das Verfahren in einer vierstufigen Kesselkaskade ausgeführt wird.

10. Verfahren gemäss Anspruch 1, dadurch gekennzeichnet, dass in wenigstens einer Stufe das Reaktionsgemisch gerührt wird.

11. Verfahren gemäss Anspruch 1, dadurch gekennzeichnet, dass in der zweiten Stufe eine Temperatur von 150 bis 170°C eingehalten wird.

12. Verfahren gemäss Anspruch 1, dadurch gekennzeichnet, dass in der dritten Stufe eine Temperatur von 190 bis 195°C eingehalten wird.

13. Verfahren gemäss Anspruch 1, dadurch gekennzeichnet, dass die dritte Stufe bei vermindertem Druck von 10 bis 60 hPa durchgeführt wird.

14. Verfahren gemäss Anspruch 1, dadurch gekennzeichnet, dass 50 - 100 % der eingesetzten Katalysatormenge und das 2,4-Di-tert-butylphenol über eine Füllkörperkolonne, in welcher die Vorstufe abläuft, zur Reaktion gegeben werden.

15. Verfahren nach Anspruch 1, dadurch gekennzeichnet, dass das Verfahren kontinuierlich durchgeführt wird.

## Claims

1. A process for the preparation of tris(2,4-ditert-butylphenyl) phosphite from 2,4-ditert-butylphenol and phosphorus trichloride in the presence of catalysts, which comprises carrying out the reaction in an at least three-stage process in which the 2,4-ditert-butylphenol and 40-100 % of the catalyst are combined in a preliminary stage and the 2,4-ditert-butylphenol with 40-100 % of the catalyst are added to the phosphorus trichloride in a first stage, the reaction mixture being allowed to react under normal pressure and at temperatures of 55 to 70°C for a dwell time of 15 to 40 minutes, the reaction mixture is then allowed to react in a second stage under normal pressure and at temperatures of over 140°C, remaining amounts of catalyst being added to the first and/or second reaction stage, the reaction mixture is then kept under reduced pressure at temperatures of at least 186°C in a third reaction stage, and the tris(2,4-ditert-butylphenyl) phosphite is then isolated from the reaction mixture, the process being carried out in the absence of solvents.

2. A process according to claim 1, wherein the reaction mixture is subjected to a fourth stage in which the reaction mixture is kept at at least 186°C and under reduced pressure in the fourth stage.

3. A process according to claim 1, wherein a reaction time of 45 to 75 minutes is maintained in the second stage.

4. A process according to claim 1, wherein a reaction time of 1.5 to 2.5 hours is maintained in the third stage.

5. A process according to claim 2, wherein a reaction time of 20 to 120 minutes is maintained in the fourth stage.

6. A process according to claim 2, wherein a temperature of 190 to 195°C is maintained in the fourth stage.

7. A process according to claim 1, wherein the 2,4-ditert-butylphenol is added in a 1-fold to 1.1-fold stoichiometric amount, relative to the phosphorus trichloride.

8. A process according to claim 1, wherein the process is carried out in a three-stage kettle cascade.

9. A process according to claim 2, wherein the process is carried out in a four-stage kettle cascade.

10. A process according to claim 1, wherein the reaction mixture is stirred in at least one stage.

11. A process according to claim 1, wherein a temperature of 150 to 170°C is maintained in the second stage.

12. A process according to claim 1, wherein a temperature of 190 to 195°C is maintained in the third stage.

13. A process according to claim 1, wherein the third stage is carried out under a reduced pressure of 10 to 60 hPa.

14. A process according to claim 1, wherein 50 - 100 % of the amount of catalyst employed and the 2,4-ditert-butylphenol are added to the reaction via a packed column in which the preliminary stage is carried out.

15. A process according to claim 1, wherein the process is carried out continuously.

## Revendications

1. Procédé de préparation du tris(2,4-di-tert-butylphényl)phosphite à partir de 2,4-di-tert-butylphénol et de trichlorure de phosphore en présence de catalyseurs, **caractérisé** en ce que la réaction est conduite dans un procédé d'au moins trois étapes, le 2,4-di-tert-butylphénol étant mis en présence dans une étape préalable, avec 40 à 100 % du catalyseur et dans une première étape, on ajoute le 2,4-di-tert-butylphénol avec 40-100 % du catalyseur au trichlorure de phosphore, le mélange réactionnel réagissant à pression normale et à des températures comprises entre 55°C et 70°C pendant une durée de séjour comprise entre 15 et 40 minutes, puis, le mélange réactionnel, dans une deuxième étape, est mis à réagir à pression normale et à des températures supérieures à 140°C, les quantités restantes en catalyseur de la première et/ou de la deuxième étape réactionnelles étant additionnées, puis, le mélange réactionnel, dans une troisième étape réactionnelle, est maintenu à une pression réduite à des températures d'au moins 186°C et ensuite le tris(2,4-di-tert-butylphényl)phosphite est isolé du mélange réactionnel, le procédé étant réalisé en absence de solvant.

2. Procédé selon la revendication 1, **caractérisé** en ce que le mélange réactionnel est soumis à une quatrième étape, le mélange réactionnel dans la quatrième étape étant maintenu à au moins 186°C et à pression réduite.

3. Procédé selon la revendication 1, **caractérisé** en ce qu'un temps de réaction dans la deuxième étape est compris entre 45 et 75 minutes.

4. Procédé selon la revendication 1, **caractérisé** en ce que le temps de réaction dans la troisième étape est maintenu entre 1,5 et 2,5 heures.

5. Procédé selon la revendication 2, **caractérisé** en ce que le temps de réaction dans la quatrième étape est maintenu entre 20 et 120 minutes.

6. Procédé selon la revendication 2, **caractérisé** en ce qu'une température dans la quatrième étape est maintenue entre 190 et 195°C.

7. Procédé selon la revendication 1, **caractérisé** en ce que le 2,4-di-tert-butylphénol est introduit dans une quantité de 1 à 1,1 fois la stoechiométrie, rapporté au trichlorure de phosphore.

8. Procédé selon la revendication 1, **caractérisé** en ce que le procédé est réalisé dans une cascade de réacteurs en trois étapes.

9. Procédé selon la revendication 2, **caractérisé** en ce que le procédé est réalisé dans une cascade de réacteurs en quatre étapes.

10. Procédé selon la revendication 1, **caractérisé** en ce que le mélange réactionnel est agité dans au moins une étape.

11. Procédé selon la revendication 1, **caractérisé** en ce qu'une température dans la deuxième étape est maintenue entre 150 et 170°C.

12. Procédé selon la revendication 1, **caractérisé** en ce qu'une température dans la troisième étape est maintenue entre 190 et 195°C.

13. Procédé selon la revendication 1, **caractérisé** en ce que la troisième étape est réalisée à une pression réduite comprise entre 10 et 60 hPa.

14. Procédé selon la revendication 1, **caractérisé** en ce que 50 à 100 % de la quantité de catalyseur utilisé et le 2,4-di-tert-butylpnénol sont mis en réaction par l'intermédiaire d'une colonne à garnissage, dans laquelle se déroule l'étape préalable.

15. Procédé selon la revendication 1, **caractérisé** en ce que le procédé est réalisé en continu.
